# EUROPÄISCHE PATENTSCHRIFT

(11) **EP 4 146 455 B1**
(45) Veröffentlichungstag und Bekanntmachung des Hinweises auf die Patenterteilung: **05.06.2024**
(21) Anmeldenummer: 22706292.4
(22) Anmeldetag: 16.02.2022
(51) Int. Cl.: B29C 64/188, B29C 64/35, B33Y 30/00, B33Y 40/20

(54) **VORRICHTUNG ZUR REINIGUNG VON GEDRUCKTEN 3D-OBJEKTEN**
APPARATUS FOR CLEANING PRINTED 3D OBJECTS
DISPOSITIF DE NETTOYAGE D'OBJETS IMPRIMÉS EN 3D

(30) Priorität: 22.02.2021 DE 102021104076
(43) Veröffentlichungstag der Anmeldung: 15.03.2023
(73) Patentinhaber: Mühlbauer Technology GmbH, 22547 Hamburg (DE)
(72) Erfinder: TRÄGER, Jens, 25491 Hetlingen (DE)
(74) Vertreter: Glawe, Delfs, Moll
(86) Internationale Anmeldenummer: PCT/EP2022/053792
(87) Internationale Veröffentlichungsnummer: WO 2022/175311

(56) Entgegenhaltungen:
- WO-A1-2019/111208
- WO-A1-2020/165430

## Beschreibung

Die Erfindung betrifft eine Vorrichtung zur Nachreinigung von aus einer lichthärtenden Harzformulierung umfassend unlösliche Füllstoffpartikel gedruckten 3D-Objekten mit an der Oberfläche anhaftenden, nicht-ausgehärteten Resten der Harzformulierung, sowie die Verwendung einer entsprechenden Vorrichtung.

Im Stand der Technik sind 3D-Drucker diverser Bauarten und für unterschiedliche Druckverfahren bekannt. Ein bekanntes Druckverfahren ist dabei das stereolithografische Verfahren, bei dem eine geeignete flüssige Harz- bzw. Monomerformulierung durch gezieltes Belichten punktweise ausgehärtet wird, um schichtweise ein gewünschtes dreidimensionales Objekt zu erzeugen.

In der klassischen Stereolithografie wird dazu ein fokussierter Laserstrahl über einen um zwei zueinander senkrecht stehende Achsen schwenkbaren Spiegel abgelenkt, um das Harz in den in einer Schicht auszuhärtenden Punkten nacheinander abzufahren und so zu belichten. Insbesondere, wenn größere Flächen ausgehärtet werden sollen, ist dieses Verfahren zeitaufwendig, da auszuhärtende Flächen punktweise abgefahren, die Flächen durch den Laser also praktisch schraffiert werden müssen. Auch kann es bei größeren Objekten zu Verzerrungen im Randbereich kommen, falls der Laser nur in einem flachen Winkel auf das auszuhärtende Harz auftrifft.

Als Alternative dazu wurde das sogenannte "Digital Light Processing" (DLP)-Druckverfahren entwickelt. Bei diesem Verfahren wird das Licht einer Lichtquelle über eine digitale Mikrospiegel-Einheit auf das auszuhärtende Harz gelenkt. Die Mikrospiegel-Einheit umfasst dabei eine rechteckige Anordnung von kippbaren Mikrospiegeln, die einzelnen ansteuerbar sind. Typische Mikrospiegel-Einheiten umfassen 1920 × 1080 einzelnen steuerbare Spiegel, die zwischen einer Position, in der das darauf auftreffende Licht auf einen jeweils vorgegebenen Punkt im Harz hin umgelenkt wird, und einer zweiten Position, in der dies nicht geschieht, verschwenkt werden können. Die Anzahl der individuell aushärtbaren Punkte in einer Schicht des Harzes ist durch die Anzahl der Spiegel der Mikrospiegel-Einheit vorgegeben. Die letztendliche Größe der einzelnen Punkte im Harz kann durch den Abstand zwischen Mikrospiegel-Einheit und der zu belichtenden Schicht beeinflusst werden.

Im Stand der Technik sind weiterhin Ausführungsformen bekannt, bei denen anstelle einer durch eine Lichtquelle beleuchteten Mikrospiegel-Einheit ein von einer flächigen Lichtquelle von hinten beleuchtetes LCD-Display verwendet wird, um Harz an gewünschten Punkten auszuhärtenden. Dabei muss das LCD-Display, welches selektiv an einzelnen Punkten das Licht der dahinterliegenden Beleuchtung durchlassen kann, unmittelbar an der Schicht mit den auszuhärtenden Punkten im ansonsten flüssigen Harz angeordnet sein.

Bei mit entsprechend 3D-Druckern erzeugten Objekten haften bei Entnahme aus den 3D-Druckern regelmäßig noch nicht-ausgehärtete Reste der Harzformulierung an, die zu entfernen sind. Hierzu ist es bekannt, die 3D-Objekte mit einem flüssigen Reinigungsmittel zu behandeln, welches die nicht ausgehärteten Reste der Harzformulierung chemisch entfernt, ohne das eigentliche 3D-Objekt bzw. dessen ausgehärtetes Material anzugreifen.

Durch die bei dieser Reinigung ablaufenden Prozesse zum Lösen der Reste der Harzformulierung erschöpft sich das Reinigungsmittel nach und nach, womit die Reinigungsleistung des Reinigungsmittels mit jedem Reinigungsvorgang abnimmt, bis es keine ausreichende Reinigungswirkung mehr entfaltet.

Im Stand der Technik wird vorgeschlagen, die mit einem Reinigungsmittel durchzuführenden Anzahl an Reinigungszyklen zu beschränken und das Reinigungsmittel nach Erreichen der vorgegebenen Anzahl auszutauschen. Dabei wird die Anzahl regelmäßig so gering gewählt, dass auch bei grundsätzlich großen Harzanhaftungen jeder der zu reinigenden 3D-Objekte in sämtlichen Reinigungszyklen eine ausreichende Reinigungswirkung erreicht wird. Das hat den Nachteil, dass wenn zumindest in einigen Reinigungszyklen nur geringe Reste der Harzformulierung zu entfernen sind und somit das Reinigungsmittel nur wenig verbraucht wird, das Reinigungsmittel aufgrund des Erreichens der vorgegebenen Anzahl an Reinigungszyklen ausgetauscht wird, obwohl es noch für weitere Reinigungsvorgänge grundsätzlich geeignet wäre.

In Dokument WO 2019/111208 A1 ist eine Vorrichtung zur Reinigung von 3D-Objekten gezeigt, bei der eine Gabellichtschranke als Verschmutzungssensor in der Reinigungskammer angeordnet ist. Nimmt die von dem Lichtsensor erfasste Lichtmenge ab, deutet dies auf einen erhöhten Anteil an nicht-lichtdurchlässigen Partikeln im Reinigungsmittel hin, die Rückschlüsse auf die Verschmutzung zulassen. Bei den von einem 3D-Objekt durch ein geeignetes Reinigungsmittel gelösten nicht-lichtdurchlässigen Partikeln handelt es sich regelmäßig um Füllstoffe oder Pigmente aus der Harzformulierung.

Es hat sich gezeigt, dass die durch den in Dokument
WO 2019/111208 A1 offenbarten lichtbasierten Verschmutzungssensor ermittelten Verschmutzungsgrad des Reinigungsmittels recht ungenau ist und nur näherungsweise Rückschlüsse auf die tatsächliche Reinigungskapazität des Reinigungsmittels erlauben.

Aufgabe der vorliegenden Erfindung, ist es eine Vorrichtung zur Reinigung von gedruckten 3D-Objekten und deren Verwendung zu schaffen, bei der die Nachteile aus dem Stand der Technik nicht mehr oder nur noch in geringerem Umfang auftreten.

Gelöst wird diese Aufgabe durch eine Vorrichtung gemäß dem Hauptanspruch, sowie deren Verwendung gemäß Anspruch 13. Vorteilhafte Weiterbildungen sind Gegenstand der abhängigen Ansprüche.

Demnach betrifft die Erfindung eine Vorrichtung zur Nachreinigung von aus einer lichthärtenden Harzformulierung gedruckten 3D-Objekten mit an der Oberfläche anhaftenden, nicht-lichtdurchlässige und unlösbare Partikel aufweisenden, nicht-ausgehärteten Resten der Harzformulierung, umfassend eine mit einem flüssigen Reinigungsmittel befüllbare Reinigungskammer mit einem Rührwerk zur Aufnahme des zu reinigenden 3D-Objekts, wobei ein mit einer Steuerungseinheit verbundener Kontaminationsdetektor zur Überprüfung der verbleibenden Reinigungskapazität des Reinigungsmittels vorgesehen ist, welcher die optische Dichte des Reinigungsmittels bei wenigstens einer Wellenlänge im Bereich von 320 nm bis 400 nm ermittelt, wobei der Kontaminationsdetektor in einem von nicht-lichtdurchlässigen und unlösbaren Partikeln oberhalb einer vorgegebenen Größe in dem Reinigungsmittel freigehaltenen Bereich angeordnet und die Steuerungseinheit dazu ausgebildet ist, aus der ermittelten optischen Dichte die Reinigungskapazität des Reinigungsmittels zu ermitteln und bei Unterschreitung einer vorgegebenen minimalen Reinigungskapazität einen entsprechenden Hinweis auszugeben.

Die Erfindung betrifft weiterhin die Verwendung der erfindungsgemäßen Vorrichtung zur Nachreinigung eines aus einer lichthärtenden Harzformulierung gedruckten 3D-Objektes mithilfe eines in die Reinigungskammer gefüllten flüssigen Reinigungsmittel zum Entfernen von an der Oberfläche des 3D-Objektes anhaftenden, nicht-lichtdurchlässige und unlösbare Partikel aufweisenden, nicht-ausgehärteten Resten der Harzformulierung.

Bei der erfindungsgemäßen Vorrichtung wurde erkannt, dass die Überwachung der Reinigungskapazität des Reinigungsmittels, die nicht auf der Absorption von Licht durch nicht-lichtdurchlässigen Partikeln beruht, deutlich genauer und zuverlässiger ist. Außerdem können mit der erfindungsgemäßen Vorrichtung auch Reinigungsmittel in der Reinigungskammer verwendet werden, in denen unlösbare Schleifkörper dispergiert sind, mit denen die Oberfläche des zu reinigenden 3D-Objektes optimiert wird (vgl. bspw. Patentanmeldung DE 10 2020 131 307.1). Dazu umfasst die Vorrichtung einen Kontaminationsdetektor, der in einem durch ein Filterelement von der Reinigungskammer abgegrenzten Bereich angeordnet sein kann, dass Feststoffpartikel oberhalb einer durch das Filterelement vorgegebenen Größe nicht zum Kontaminationsdetektor gelangen und dort das Messergebnis verfälschen könnten.

Bei dem Kontaminationsdetektor handelt es sich um einen Detektor zur Ermittlung der optischen Dichte des Reinigungsmittels bei einer oder mehrerer Wellenlängen im Bereich von 320 nm und 400 nm, d. h. im ultravioletten UV(A)-Bereich, außerhalb des sichtbaren Bereichs. Die Erfindung hat erkannt, dass bei der Reinigung von gedruckten 3D-Objekten mit einem geeigneten Reinigungsmittel in das Reinigungsmittel übergehende Bestandteile bekannter Harzformulierung zumindest zu einem maßgeblichen Anteil elektromagnetische Strahlung in dem genannten Wellenlängenbereich absorbieren. Weist das Reinigungsmittel in diesem Wellenlängenbereich keine oder lediglich eine Grundabsorption auf, lässt die Zunahme der optischen Dichte Rückschlüsse auf die noch verbleibende Reinigungskapazität des Reinigungsmittels zu. Dabei hat sich herausgestellt, dass die Ermittlung der Reinigungskapazität des Reinigungsmittels auf Basis der optischen Dichte in einem nicht-sichtbaren Bereich deutlich präzisere und zuverlässigere Aussagen zulässt als Messungen auf licht-undurchlässige Feststoffpartikel im Reinigungsmittel. Auch erlaubt die erfindungsgemäße Vorrichtung die Verwendung von unlösbaren Schleifkörpern in der Reinigungskammer, was bspw. bei der Vorrichtung gemäß WO 2019/111208 A1 nicht möglich wäre.

Die mit dem Kontaminationsdetektor verbundene Steuerungseinheit ist dazu ausgebildet, aus der ermittelten optischen Dichte die Reinigungskapazität, bspw. in Form eines Indexwertes, abzuleiten. Unterschreitet die ermittelte Reinigungskapazität eine vorgegebene minimale Reinigungskapazität, gibt die Steuerungseinheit einen Hinweis aus, sodass ein Nutzer das Reinigungsmittel austauschen kann.

Die grundsätzliche Reinigungskapazität bzw. deren Abnahme, aber auch ein Wert für die vorgegebene minimale Reinigungskapazität kann von dem Reinigungsmittel bzw. dessen Zusammensetzung abhängen. Die Steuerungseinheit kann über geeignete Parameter für unterschiedliche Reinigungsmittel verfügen, von denen dann die jeweils für das tatsächlich verwendete Reinigungsmittel geeignete Parameter ausgewählt werden.

Der Hinweis kann auf beliebige Art und Weise erfolgen, bspw. durch eine geeignete optische und/oder akustische Anzeige an der Reinigungsvorrichtung selbst. Es ist aber auch möglich, dass die Steuerungseinheit ein geeignetes Hinweissignal an eine andere, bspw. übergeordnete Vorrichtung sendet, welche den Hinweis dann geeignet automatisiert verarbeitet und/oder den Hinweis an einen Nutzer ausgibt.

Um eine möglichst variable Verwendung der erfindungsgemäßen Vorrichtung zu ermöglichen und das Risiko des Kontakts eines Nutzers mit dem Reinigungsmittel zu minimieren, ist bevorzugt, wenn ein austauschbarer Vorratsbehälter für Reinigungsmittel und eine Pumpe zur Förderung von Reinigungsmittel aus dem Vorratsbehälter in die Reinigungskammer und von der Reinigungskammer in den Vorratsbehälter vorgesehen ist, wobei der Kontaminationsdetektor vorzugsweise in der Leitung zwischen Vorratsbehälter und Reinigungskammer und das Filterelement zwischen Kontaminationsdetektor und Reinigungskammer angeordnet sind, wobei das Filterelement zum Freihalten des Bereichs um den Kontaminationsdetektor von den nicht-lichtdurchlässigen und unlösbaren Partikeln oberhalb der vorgegebenen Größe in dem Reinigungsmittel vorgesehen ist.

Durch das Vorsehen eines entsprechenden Vorratsbehälters und einer Pumpe kann erreicht werden, dass sich Reinigungsmittel ausschließlich während der eigentlichen Reinigung in der Reinigungskammer befindet, während es in den übrigen Zeiten in Vorratsbehälter gepumpt ist. Bspw. während des Einbringens und Entnehmens eines gedruckten 3D-Objektes in die Reinigungskammer ist diese also nicht mit Reinigungsmittel gefüllt, sodass Kontakt von einem Nutzer mit dem Reinigungsmittel wirksam vermieden wird.

Durch das Vorsehen eines austauschbaren Vorratsbehälters ist der Austausch des Reinigungsmittels problemlos möglich. Indem sich das Reinigungsmittel außerhalb der tatsächlichen Reinigung im Vorratsbehälter befindet, kann das Reinigungsmittel nämlich durch einfachen Austausch des Vorratsbehälters ausgetauscht werden. Auch kann die Vorrichtung ohne Aufwand mit unterschiedlichen Reinigungsmitteln betrieben werden.

Die bevorzugte Anordnung des Kontaminationsdetektors in der Leitung zwischen Vorratsbehälter und Reinigungskammer bietet den Vorteil, dass die Reinigungskapazität des Reinigungsmittels während des Pumpens in oder aus der Reinigungskammer über das gesamte Reinigungsmittel bspw. als Mittelwert bestimmt werden kann. Es können so ggf. lokal auftretende Effekt bei der Anordnung des Kontaminationsdetektors in der Reinigungskammer selbst, durch die das Messergebnis verfälscht werden könnte, vermieden werden. Außerdem ermöglich die Anordnung des Kontaminationsdetektors in der Leitung regelmäßig die einfache Nachrüstung einer bereits vorhandenen Reinigungsvorrichtung zu einer erfindungsgemäßen Vorrichtung, indem lediglich die fragliche Leitung oder zumindest ein Teil davon ausgetauscht oder angepasst werden muss.

Ist ein austauschbarer Vorratsbehälter vorgesehen, ist bevorzugt, wenn dieser ein durch die Steuerungseinheit auslesbares Speicherelement, vorzugsweise ein RFID-Element, aufweist, auf dem die aktuelle Reinigungskapazität des im Vorratsbehälter vorgehaltenen Reinigungsmittels abgelegt ist. Auch könnten auf dem Speicherelement Informationen zu dem im Vorratsbehälter befindlichen Reinigungsmittel, wie dessen Bezeichnung und/oder Zusammensetzung abgelegt sein. Auch können die für die Steuerungseinheit erforderlichen Parameter, um aus einer ermittelten optischen Dichte die Reinigungskapazität abzuleiten, auf dem Speicherelement abgelegt sein und bei Verwendung durch die Steuerungseinheit ausgelesen werden. Indem die fraglichen Informationen auf dem Speicherelement des Vorratsbehälters abgelegt sind, kann dieser mit verschiedenen erfindungsgemäßen Vorrichtungen verwendet werden, ohne dass im Hinblick auf die Reinigungskapazität relevanten Informationen bei den einzelnen Vorrichtungen möglicherweise nicht zur Verfügung stehen oder aber aufwendig zentral verwaltet werden müssten.

Es ist bevorzugt, wenn die Steuerungseinheit zur Bestimmung der optische Dichte des Reinigungsmittels jeweils vor und nach einem Reinigungsvorgang ausgebildet ist. Ist ein Vorratsbehälter vorgesehenen und ist der Kontaminationsdetektor in der Leitung zwischen Vorratsbehälter und Reinigungskammer angeordnet, kann die jeweilige Messung beim Pumpen des Reinigungsmittels in bzw. aus der Reinigungskammer erfolgen.

Durch eine entsprechende Messung vor und nach einem Reinigungsvorgang kann die Degradation des Reinigungsmittels durch die Reinigung festgestellt werden. Es ist bevorzugt, wenn die Steuerungseinheit dazu ausgebildet ist, aus der Differenz der optische Dichte des Reinigungsmittels vor und nach einem Reinigungsvorgang eine Abnahme der Reinigungskapazität zu ermitteln und einem Ausgangswert der Reinigungskapazität, der insbesondere die nach dem vorherigen Reinigungsvorgang ermittelte Reinigungskapazität widerspiegelt und bspw. auf dem Speicherelement des Vorratsbehälters abgelegt sein kann, entsprechend anzupassen.

Es ist bevorzugt, wenn die Steuerungseinheit dazu ausgebildet ist, zur Ermittlung der Reinigungskapazität des Reinigungsmittels aus der optischen Dichte und/oder zur Ermittlung der Abnahme der Reinigungskapazität anhand der Differenz der optischen Dichte vor und nach einem Reinigungsvorgang vorbestimmte Kennlinien für die Kombination aus Reinigungsmittel und der lichthärtenden Harzformulierung, aus der das 3D-Objekt hergestellt ist, zu berücksichtigen. Dadurch ist es möglich, ein Reinigungsmittel zur Reinigung von 3D-Objekten aus verschiedenen Harzformulierungen zu verwenden. Insbesondere wenn ein Reinigungsmittel zur Reinigung von 3D-Objekten aus unterschiedlichen Harzformulierungen verwendet wird, kann die Veränderung der Reinigungskapazität des Reinigungsmittels bei jedem Reinigungsvorgang genau nachgehalten werden. Dadurch kann das Risiko einer unzutreffenden Einschätzung der Reinigungskapazität, die in einer mangelhaften Reinigung oder der Entsorgung von noch brauchbarem Reinigungsmittel resultieren kann, vermindert werden.

Um die nach einem Reinigungsvorgang verbleibende Reinigungskapazität möglichst genau bestimmen zu können, ist es vorteilhaft, wenn die Steuerungseinheit über Informationen zur Harzformulierung eines zu reinigenden 3D-Objektes verfügt. Um diese Informationen zuzuführen, weist die Steuerungseinheit vorzugsweise einen Eingang für Informationen zur lichthärtenden Harzformulierung, aus der das 3D-Objekt hergestellt ist, auf. Über diesen Eingang können die fraglichen Informationen bspw. von einem der erfindungsgemäßen Vorrichtung vorgeschalteten 3D-Drucker zur Verfügung gestellt werden. Es ist aber auch möglich, dass an dem Eingang ein Eingabeterminal angeschlossen ist, über welches ein Nutzer die fraglichen Informationen eingeben oder bspw. aus einer geeigneten Datenbank auswählen kann.

Als Reinigungsmittel kommen beispielsweise Isopropanol, Ethanol, Dimethyladipat, Butyldiglycol oder Tripropylenglycolmonomethylether (TPM) in Betracht. Sofern diese Substanzen mit Wasser mischbar sind, werden sie bevorzugt auch als wässrige Mischungen eingesetzt, dann weiter bevorzugt zusammen mit einer oder mehreren geeigneten oberflächenaktiven Substanzen (Tenside). Die genannten Reinigungsmittel bieten den Vorteil, dass sie in dem hier relevanten Wellenlängenbereich keine oder nur wenig Absorption aufweisen.

Es hat sich gezeigt, dass es grundsätzlich ausreichend sein kann, wenn die optische Dichte für lediglich eine Wellenlänge bestimmt wird. Insbesondere ist dabei bevorzugt, wenn die wenigstens eine Wellenlänge in einem Bereich von 365 nm bis 385 nm gewählt ist.

Der Bereich um den Kontaminationsdetektor kann auf verschiedene Weise von nicht-lichtdurchlässigen und unlösbaren Partikeln oberhalb einer vorgegebenen Größe in dem Reinigungsmittel freigehalten werden. Beispielsweise ist es möglich, vor einer Messung durch den Kontaminationsdetektor das Reinigungsmittel so zur Ruhe kommen zu lassen, dass sich die fraglichen Partikel schwerkraftbedingt ausreichend absetzen, dass sie im Bereich des Kontaminationsdetektors nicht mehr vorliegen. Es ist aber bevorzugt, ein Filterelement zum Freihalten des Bereichs um den Kontaminationsdetektor von nicht-lichtdurchlässigen und unlösbaren Partikeln oberhalb einer vorgegebenen Größe in dem Reinigungsmittel vorzusehen. Ein entsprechendes Filterelement bietet die Möglichkeit, zu jedem beliebigen Zeitpunkt unbeeinflusst von nicht-lichtdurchlässigen und unlösbaren Partikeln im Reinigungsmittel Messungen mit dem Kontaminationsdetektor durchzuführen.

Das Filterelement ist vorzugsweise für Feststoffpartikel mit einer Größe von über 1 mm, vorzugsweise von über 0,1 mm weiter vorzugsweise von über 0,01 mm oder 0,001 mm undurchlässig. Durch das Filterelement können dann zuverlässig etwaige Schleifkörper und von dem 3D-Objekt losgelöste Feststoffpartikel vom Kontaminationsdetektor ferngehalten werden.

Der Kontaminationsdetektor kann als Transmissionsdetektor ausgebildet sein, bei dem Strahlung von einer Strahlungsquelle, bspw. einer Leuchtdiode, durch das zu überprüfende Reinigungsmittel geleitet wird, bevor es mit einem Strahlungssensor detektiert wird. Strahlungsquelle und Strahlungssensor sind dabei bevorzugt an die zu untersuchende(n) Wellenlänge(n) angepasst. Alternativ dazu kann der Kontaminationsdetektor auch als ATR-Detektor ausgebildet sein, mit dem auch höhere optische Dichten des Reinigungsmittels für eine oder mehrere bestimmte Wellenlängen bestimmt werden können.

Es ist bevorzugt, wenn der oder ein weiterer Kontaminationsdetektor als Refraktometer zur Ermittlung des Brechungsindex des Reinigungsmittels und die Steuereinheit zur Berücksichtigung des Brechungsindex bei der Ermittlung der Reinigungskapazität zusätzlich zur optischen Dichte oder zur Ableitung der optischen Dichte des Reinigungsmittels aus dem Brechungsindex ausgebildet ist. Die Ermittlung des Brechungsindex bietet den Vorteil, dass sie von dem Vorhandensein von auch kleinsten Feststoffpartikel (insbesondere unterhalb der Durchlassgröße des Filterelementes) nicht oder kaum beeinflusst wird. Gleichzeitig kann auch der Brechungsindex einen gewissen Aufschluss über die Reinigungskapazität eines Reinigungsmittels liefern, und sei es, indem der Brechungsindex näherungsweise in die optische Dichte des Reinigungsmittels umgerechnet wird. Entsprechende Umrechnungen auf Basis von empirisch ermittelten Kennlinien oder Umrechnungsfaktoren sind aus dem Stand der Technik bekannt.

Die Vorrichtung kann weiterhin eine Vorrichtung zur Ermittlung der Massendichte des Reinigungsmittels, vorzugsweise ein Aräometer, umfassten, wobei die Steuerungseinheit dann dazu ausgebildet ist, die von dieser Vorrichtung ermittelte Massendichte bei der Ermittlung der Reinigungskapazität des Reinigungsmittels zu berücksichtigen. Die Berücksichtigung der Massendichte des Reinigungsmittels zusätzlich zur optischen Dichte und ggf. des Brechungsindex ermöglicht eine noch genauere Feststellung der Reinigungskapazität des Reinigungsmittels.

Die Erfindung wird nun anhand einer vorteilhaften Ausführungsform unter Bezugnahme auf die beigefügte Zeichnung beispielhaft beschrieben. Es zeigen:

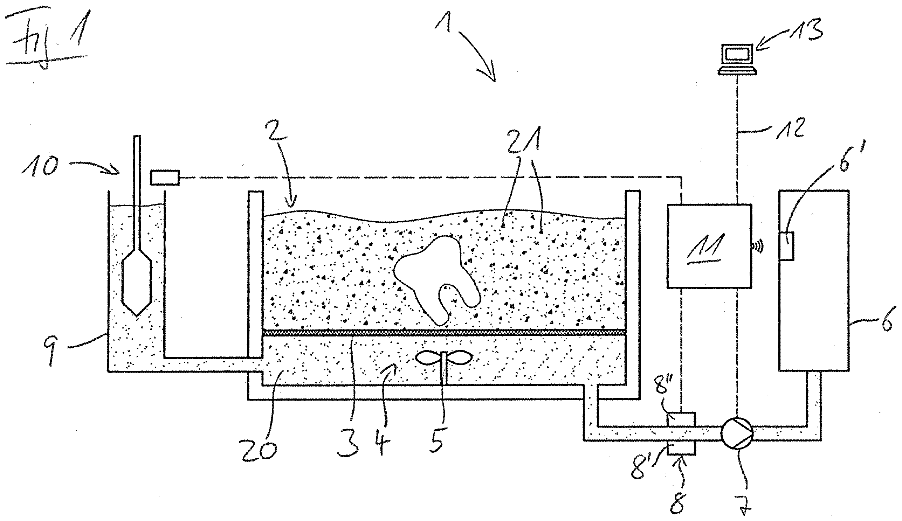

- Figur 1:: ein Ausführungsbeispiel einer erfindungsgemäßen Vorrichtung.

In Figur 1 ist eine zur Nachreinigung einer Zahnprothese als 3D-Objekt 90 gemäß dem erfindungsgemäßen Verfahren ausgebildete Reinigungsvorrichtung 1 gezeigt. Die Zahnprothese 90 wurde in einem 3D-Druckverfahren gemäß dem Stand der Technik aus lichthärtender Harzformulierung umfassend unlösliche Füllstoffpartikel hergestellt.

Die Reinigungsvorrichtung 1 umfasst eine Reinigungskammer 2 zur Aufnahme eines flüssigen Reinigungsmittels 20. Der Boden der Reinigungskammer 2 ist durch ein Gitter gebildet, welches als ein Filterelement 3 für Feststoffpartikel mit einer Größe von über 0,1 mm wirkt. Dem Reinigungsmittel 20 in der Reinigungskammer 2 sind vom Reinigungsmittel 20 unlösbare Schleifkörper 21 größer 0,1 mm zugegeben, die - ebenso wie vom 3D-Objekt 90 abgelöste Füllstoffpartikel entsprechender Größe - von dem Filterelement 3 in der Reinigungskammer 2 gehalten werden und insbesondere nicht in den Unterraum 4 unterhalb des Filterelementes 3 gelangen können.

In dem Unterraum 4 ist ein Rührwerk 5 angeordnet, durch das das Reinigungsmittel 20 auch über das Filterelement 3 hinweg bewegt, sodass sich bei aktiviertem Rührwerk 5 eine Umströmung der Zahnprothese 90 einstellt, mit der auch die Schleifkörper 21 an dem 3D-Objekt 90 entlanggeführt werden.

Am Unterraum 4 ist eine Leitung 5 angeschlossen, die zu einem austauschbaren Vorratsbehälter 6 umfassend ein RFID-Element 6' führt. In der Leitung 5 ist neben einer Pumpe 7, mit der das Reinigungsmittel 10 wahlweise aus dem austauschbaren Vorratsbehälter 6 in die Reinigungskammer 2 oder aus der Reinigungskammer 2 in den austauschbaren Vorratsbehälter 6 gepumpt werden kann, noch ein Kontaminationsdetektor 8 vorgesehen. Der Kontaminationsdetektor 8 umfasst auf gegenüberliegenden Seiten der Leitung 5 angeordnet eine Leuchtdiode als Strahlungsquelle 8` und einen Strahlungsdetektor 8". Strahlungsquelle 8` und Strahlungsdetektor 8" sind jeweils für Strahlung bei einer Wellenlänge von 385 nm ausgelegt und ermöglichen so die Bestimmung der optischen Dichte des durch die Leitung 5 strömenden Fluids in Form einer Transmissionsbestimmung bei einer Wellenlänge von 385 nm.

Ebenfalls ausgehend vom Unterraum 4 ist ein mit der Reinigungskammer 2 bzw. dem Unterraum 4 kommunizierendes Gefäß 9 vorgesehen, in dem ein digital auslesbares Aräometer 10 angeordnet ist, mit dem die Massendichte des Reinigungsmittels 20 bestimmt werden kann.

Pumpe 7, Kontaminationsdetektor 8 und Aräometer 10 sind mit einer Steuerungseinheit 11 verbunden, welche die Messdaten von Kontaminationsdetektor 8 und Aräometer 10 auswerten und die Pumpe 7 ansteuern kann. Die Steuerungseinheit 11 kann über eine weitere (nicht dargestellte) Steuerungsleitung auch das Rührwerk 5 steuern. Weiterhin ist die Steuerungseinheit 11 dazu ausgebildet, Daten vom RFID-Element 6' des austauschbaren Vorratsbehälters 6 zu lesen und bei Bedarf zu aktualisieren, und verfügt über eine Datenschnittstelle 12, über die Hinweise von der Steuerungseinheit versendet und Informationen empfangen werden können. Beispielsweise kann die Steuerungseinheit 11 mit einem Computerterminal 13 verbunden sein, welches ein Nutzerinterface für die Steuerungseinheit 11 bereitstellt.

Die Steuerungseinheit 11 ist dazu ausgebildet, aus der durch den Kontaminationsdetektor 8 ermittelten optischen Dichte die Reinigungskapazität des Reinigungsmittels 20 zu ermitteln und bei Unterschreitung einer vorgegebenen minimalen Reinigungskapazität einen entsprechenden Hinweis über die Datenschnittstelle 12 auszugeben, welcher dann bspw. auf dem Computerterminal 13 zur Anzeige gebracht wird.

Die Überprüfung der Reinigungskapazität des Reinigungsmittels 20 durch die Steuerungseinheit wird nun anhand eines beispielhaften Reinigungsvorgangs erläutert, der letztendlich der erfindungsgemäßen Verwendung der Reinigungsvorrichtung 1 entspricht. Die Reinigungskapazität wird dabei als Indexwert angegeben, wobei ein höherer Indexwert eine höhere Reinigungskapazität widerspiegelt. Weiterhin ist ein minimal zulässiger Indexwert vorgegeben, der einen weiteren Reinigungsvorgang mit einem Reinigungsmittel 20 ermöglicht.

Im Ausgangszustand befindet sich kein Reinigungsmittel in der Reinigungskammer 2. Lediglich die Schleifkörper 21 liegen lose auf dem Filterelement 3 auf.

Das zu reinigende 3D-Objekt 90 wird von einem Nutzer in die Reinigungskammer 2 eingelegt. Der Nutzer wählt außerdem an dem Computerterminal 13 aus einer Datenbank diejenige Harzformulierung aus, aus welcher das 3D-Objekt 90 gedruckt wurde. Diese Informationen zur Harzformulierung werden der Steuerungseinheit 11 zur Verfügung gestellt.

Der Nutzer setzt außerdem einen austauschbaren Vorratsbehälter 6 mit für die Harzformulierung des 3D-Objektes 90 grundsätzlich geeignetem Reinigungsmittel 20 in die Vorrichtung 1. Die Steuerungseinheit 11 liest dabei die Daten aus dem RFID-Element 6` des austauschbaren Vorratsbehälters 6 aus und erhält so neben Informationen zur Zusammensetzung des Reinigungsmittels 20 auch einen Indexwert betreffend der Reinigungskapazität des in dem austauschbaren Vorratsbehälter 6 befindlichen Reinigungsmittels 20.

Liegt der von dem RFID-Element 6' ausgelesene Indexwert zur Reinigungskapazität unterhalb des vorgegebenen minimalen Indexwertes, wird ein entsprechender Hinweis über die Datenschnittstelle 12 und das Computerterminal 13 an den Nutzer ausgegeben, der dazu aufgefordert wird, einen austauschbaren Vorratsbehälter 6 mit Reinigungsmittel 20 mit ausreichender Reinigungskapazität einzusetzen.

Liegt der von dem RFID-Element 6' ausgelesene Indexwert oberhalb des vorgegebenen minimalen Indexwertes, beginnt der eigentliche Reinigungsvorgang. Dazu wird mithilfe der Pumpe 7 das Reinigungsmittel 20 aus dem austauschbaren Vorratsbehälter 6 in die Reinigungskammer 2 gepumpt. Dabei wird durch den Kontaminationsdetektor 8 die optische Dichte des Reinigungsmittels 20 überprüft, was - je nach Ausgestaltung der Steuerungseinheit - entweder der Überprüfung des aus dem RFID-Element 6' ausgelesenen Indexwert für die Reinigungskapazität oder aber zur Kalibrierung des Kontaminationsdetektors 8 auf eben diesen Wert genutzt werden kann.

Ist sämtliches Reinigungsmittel 20 in die Reinigungskammer 2 eingebracht, wird über das Aräometer 10 die Massendichte des Reinigungsmittels 20 bestimmt und zusammen mit dem durch den Kontaminationsdetektor 8 ermittelt Durchschnittswert der optischen Dichte in der Steuerungseinheit 11 zwischengespeichert.

Anschließend wird das Rührwerk 5 in Betrieb genommen. Dadurch wird das 3D-Objekt 90 von dem Reinigungsmittel 20 umströmt. Gleichzeitig werden die Schleifkörper 21 in dem Reinigungsmittel 20 innerhalb der Reinigungskammer 3 dispergiert und tragen so zur Oberflächenbehandlung des 3D-Objektes 90 bei.

Nach einem vorgegebenen Zeitraum wird das Rührwerk 5 wieder deaktiviert und es wird erneut die Massendichte des Reinigungsmittels 20 über das Aräometer 10 bestimmt und an die Steuerungseinheit 11 übermittelt. Das Reinigungsmittel 20 wird dann durch die Pumpe 7 aus der Reinigungskammer 2 zurück in den Vorratsbehälter 6 gepumpt, wobei über den Kontaminationsdetektor 8 erneut ein Durchschnittswert zur optischen Dichte ermittelt und an die Steuerungseinheit 11 übermittelt wird. Die Schleifköper 21 werden dabei durch das Filterelement 3 in der Reinigungskammer 2 zurückgehalten und gelangen somit nicht in den austauschbaren Vorratsbehälter 6.

Es könnten auch zusätzliche Filter, bspw. im Bereich der Leitung 5 oder dem austauschbaren Vorratsbehälter 6 bzw. der dafür vorgesehenen Aufnahme, vorgesehen sein, sodass auch durch das Filterelement 3 nicht zurückgehaltene Partikel von dem austauschbaren Vorratsbehälter 6 ferngehalten werden.

Ist sämtliches Reinigungsmittel 20 aus der Reinigungskammer 2 abgepumpt, kann ein Nutzer das nunmehr gereinigte 3D-Objekt 90 entnehmen.

Die Steuerungseinheit 11 kann aus den Informationen zur Zusammensetzung der Harzformulierung des 3D-Objektes 90 sowie des Reinigungsmittels 10 und den Messwerten zur optischen Dichte und zur Massendichte von vor und nach dem Reinigungsvorgang (bei der jeweiligen Temperatur) mithilfe von in der Steuerungseinheit 11 hinterlegten Kennlinien für die jeweils vorliegende Kombination aus Harzformulierung und Reinigungsmittel 20 die Abnahme der Reinigungskapazität ermitteln. Diese Abnahme kann in Form einer Indexwertdifferenz abgebildet und unmittelbar mit dem aus dem RFID-Element 6' ausgelesenen Indexwert verrechnet werden. Der so ermittelte Indexwert für die "neue" Reinigungskapazität des Reinigungsmittels 20 wird auf dem RFID-Element 6' abgelegt, sodass bei späteren Reinigungsvorgängen dort die jeweils aktuelle Reinigungskapazität des im austauschbaren Vorratsbehälter 6 befindlichen Reinigungsmittels 20 hinterlegt ist.

Liegt der aktualisierte Indexwert für die Reinigungskapazität des Reinigungsmittels 20 unterhalb des minimal zulässigen Indexwerts, der einen weiteren Reinigungsvorgang mit einem Reinigungsmittel 20 ermöglicht, wird über die Schnittstelle 12 und das Computerterminal 13 ein entsprechender Hinweis ausgegeben, dass das Reinigungsmittel 20 im austauschbaren Vorratsbehälter 6 keine weitere Reinigung zulässt und entsorgt werden muss.

## Patentansprüche

1. Vorrichtung (1) zur Nachreinigung von aus einer lichthärtenden Harzformulierung gedruckten 3D-Objekten (90) mit an der Oberfläche anhaftenden, nicht-lichtdurchlässige und unlösbare Partikel aufweisenden, nicht-ausgehärteten Resten der Harzformulierung, umfassend eine mit einem flüssigen Reinigungsmittel (20) befüllbare Reinigungskammer (2) mit einem Rührwerk (5) zur Aufnahme des zu reinigenden 3D-Objekts (90),
**dadurch gekennzeichnet, dass**
ein mit einer Steuerungseinheit (11) verbundener Kontaminationsdetektor (8) zur Überprüfung der verbleibenden Reinigungskapazität des Reinigungsmittels (20) vorgesehen ist, welcher die optische Dichte des Reinigungsmittels (20) bei wenigstens einer Wellenlänge im Bereich von 320 nm bis 400 nm ermittelt, wobei der Kontaminationsdetektor (8) in einem von nicht-lichtdurchlässigen und unlösbaren Partikeln oberhalb einer vorgegebenen Größe in dem Reinigungsmittel (20) freigehaltenen Bereich angeordnet und die Steuerungseinheit (11) dazu ausgebildet ist, aus der ermittelten optischen Dichte die Reinigungskapazität des Reinigungsmittels (20) zu ermitteln und bei Unterschreitung einer vorgegebenen minimalen Reinigungskapazität einen entsprechenden Hinweis auszugeben.

2. Vorrichtung nach Anspruch 1,
**dadurch gekennzeichnet, dass**
ein Filterelement (3) zum Freihalten des Bereichs um den Kontaminationsdetektor (8) von nicht-lichtdurchlässigen und unlösbaren Partikeln oberhalb einer vorgegebenen Größe in dem Reinigungsmittel (20) vorgesehen ist.

3. Vorrichtung nach Anspruch 2,
**dadurch gekennzeichnet, dass**
ein austauschbarer Vorratsbehälter (6) für Reinigungsmittel (20) und eine Pumpe (7) zur Förderung von Reinigungsmittel (20) aus dem Vorratsbehälter (6) in die Reinigungskammer (2) und von der Reinigungskammer (2) in den Vorratsbehälter (6) vorgesehen ist, wobei der Kontaminationsdetektor (8) vorzugsweise in der Leitung zwischen Vorratsbehälter (6) und Reinigungskammer (2) und das Filterelement (3) zwischen Kontaminationsdetektor (8) und Reinigungskammer (2) angeordnet sind.

4. Vorrichtung nach Anspruch 3,
**dadurch gekennzeichnet, dass**
der Vorratsbehälter (6) ein durch die Steuerungseinheit (11) auslesbares Speicherelement, vorzugsweise ein RFID-Element (6'), aufweist, auf dem die aktuelle Reinigungskapazität des im Vorratsbehälter (6) vorgehaltenen Reinigungsmittels (20) abgelegt ist.

5. Vorrichtung nach einem der vorhergehenden Ansprüche,
**dadurch gekennzeichnet, dass**
die Steuerungseinheit (11) zur Bestimmung der optischen Dichte des Reinigungsmittels (20) jeweils vor und nach einem Reinigungsvorgang ausgebildet ist.

6. Vorrichtung nach Anspruch 4,
**dadurch gekennzeichnet, dass**
die Steuerungseinheit (11) dazu ausgebildet ist, aus der Differenz der optischen Dichte des Reinigungsmittels (20) vor und nach einem Reinigungsvorgang eine Abnahme der Reinigungskapazität zu ermitteln und einem Ausgangswert der Reinigungskapazität entsprechend der ermittelten Abnahme der Reinigungskapazität anzupassen.

7. Vorrichtung nach einem der vorhergehenden Ansprüche,
**dadurch gekennzeichnet, dass**
die Steuerungseinheit (11) dazu ausgebildet ist, zur Ermittlung der Reinigungskapazität des Reinigungsmittels (20) aus der optischen Dichte und/oder zur Ermittlung der Abnahme der Reinigungskapazität anhand der Differenz der optischen Dichte vor und nach einem Reinigungsvorgang vorbestimmte Kennlinien für die Kombination aus Reinigungsmittel (20) und der lichthärtenden Harzformulierung, aus der das 3D-Objekt (90) hergestellt ist, zu berücksichtigen.

8. Vorrichtung nach Anspruch 7,
**dadurch gekennzeichnet, dass**
die Steuerungseinheit (11) einen Eingang für Informationen zur lichthärtenden Harzformulierung, aus der das 3D-Objekt (90) hergestellt ist, aufweist.

9. Vorrichtung nach einem der vorhergehenden Ansprüche,
**dadurch gekennzeichnet, dass**
die wenigstens eine Wellenlänge in einem Bereich von 350 nm bis 400 nm, vorzugsweise von 365 nm bis 385 nm gewählt ist.

10. Vorrichtung nach Anspruch 2 und vorzugsweise einem der Ansprüche 3 bis 9,
**dadurch gekennzeichnet, dass**
das Filterelement (3) für Feststoffpartikel mit einer Größe von über 1 mm, vorzugsweise von über 0,1 mm weiter vorzugsweise von über 0,01 mm oder 0,001 mm undurchlässig ist.

11. Vorrichtung nach einem der vorhergehenden Ansprüche,
**dadurch gekennzeichnet, dass**
der oder ein weiterer Kontaminationsdetektor (8) als Refraktometer zur Ermittlung des Brechungsindex des Reinigungsmittels (20) und die Steuereinheit zur Berücksichtigung des Brechungsindex bei der Ermittlung der Reinigungskapazität zusätzlich zur optischen Dichte oder zur Ableitung der optischen Dichte des Reinigungsmittels (20) aus dem Brechungsindex ausgebildet ist.

12. Vorrichtung nach einem der vorhergehenden Ansprüche,
**dadurch gekennzeichnet, dass**
eine Vorrichtung zur Ermittlung der Massendichte des Reinigungsmittels (20), vorzugsweise ein Aräometer (10), vorgesehen ist und die Steuerungseinheit (11) dazu ausgebildet ist, die von dieser Vorrichtung ermittelte Massendichte bei der Ermittlung der Reinigungskapazität des Reinigungsmittels (20) zu berücksichtigen.

13. Verwendung der Vorrichtung (1) nach einem der vorhergehenden Ansprüche zur Nachreinigung eines aus einer lichthärtenden Harzformulierung gedruckten 3D-Objektes (90) mithilfe eines in die Reinigungskammer (2) gefüllten flüssigen Reinigungsmittels (20) zum Entfernen von an der Oberfläche des 3D-Objektes anhaftenden, nicht-lichtdurchlässige und unlösbare Partikel aufweisenden, nicht-ausgehärteten Resten der Harzformulierung.

14. Verwendung nach Anspruch 13,
**dadurch gekennzeichnet, dass**
als Reinigungsmittel Isopropanol, Ethanol, Dimethyladipat, Butyldiglycol, Tripropylenglycolmonomethylether (TPM) oder eine wässrige Mischunge davon, vorzugweise zusammen mit wenigstens einer oberflächenaktiven Substanz, verwendet wird.

## Claims

1. Apparatus (1) for the post-cleaning of 3D objects (90), which are printed from a light-curing resin formulation and have uncured residues of the resin formulation, which adhere on the surface and have non-light-transmissive and insoluble particles, comprising a cleaning chamber (2), which can be filled with a liquid cleaning agent (20) and has an agitator (5) for receiving the 3D object (90) to be cleaned,
**characterized in that**
a contamination detector (8), which is connected to a control unit (11) and determines the optical density of the cleaning agent (20) at at least one wavelength in the range of from 320 nm to 400 nm, is provided for checking the remaining cleaning capacity of the cleaning agent (20), the contamination detector (8) being arranged in a region kept free of non-light-transmissive and insoluble particles above a predetermined size in the cleaning agent (20), and the control unit (11) being configured to determine the cleaning capacity of the cleaning agent (20) from the optical density which has been determined and to output a corresponding indication if a predetermined minimum cleaning capacity is fallen below.

2. Apparatus according to Claim 1,
**characterized in that**
a filter element (3) is provided in order to keep the region around the contamination detector (8) free of non-light-transmissive and insoluble particles above a predetermined size in the cleaning agent (20).

3. Apparatus according to Claim 2,
**characterized in that**
a replaceable storage container (6) for cleaning agent (20) and a pump (7) for delivering cleaning agent (20) from the storage container (6) into the cleaning chamber (2) and from the cleaning chamber (2) into the storage container (6) are provided, the contamination detector (8) preferably being arranged in the line between the storage container (6) and the cleaning chamber (2) and the filter element (3) being arranged between the contamination detector (8) and the cleaning chamber (2).

4. Apparatus according to Claim 3,
**characterized in that**
the storage container (6) has a memory element, preferably an RFID element (6'), which can be read out by the control unit (11) and on which the current cleaning capacity of the cleaning agent (20) held in the storage container (6) is recorded.

5. Apparatus according to one of the preceding claims, **characterized in that**
the control unit (11) is configured to determine the optical density of the cleaning agent (20) respectively before and after a cleaning process.

6. Apparatus according to Claim 4,
**characterized in that**
the control unit (11) is configured to determine a decrease of the cleaning capacity from the difference of the optical density of the cleaning agent (20) before and after a cleaning process and to adapt an output value of the cleaning capacity according to the cleaning capacity decrease which has been determined.

7. Apparatus according to one of the preceding claims, **characterized in that**
the control unit (11) is configured to take into account predetermined characteristic curves for the combination of cleaning agent (20) and the light-curing resin formulation from which the 3D object (90) is produced, in order to determine the cleaning capacity of the cleaning agent (20) from the optical density and/or in order to determine the decrease of the cleaning capacity with the aid of the difference of the optical density before and after a cleaning process.

8. Apparatus according to Claim 7,
**characterized in that**
the control unit (11) has an input for information items relating to the light-curing resin formulation from which the 3D object (90) is produced.

9. Apparatus according to one of the preceding claims, **characterized in that**
the at least one wavelength is selected in a range of from 350 nm to 400 nm, preferably from 365 nm to 385 nm.

10. Apparatus according to Claim 2 and preferably one of Claims 3 to 9,
**characterized in that**
the filter element (3) is impermeable for solid particles with a size of more than 1 mm, preferably more than 0.1 mm, more preferably more than 0.01 mm or 0.001 mm.

11. Apparatus according to one of the preceding claims, **characterized in that**
the contamination detector or a further contamination detector (8) is configured as a refractometer for determining the refractive index of the cleaning agent (20), and the control unit is configured to take the refractive index into account in the determination of the cleaning capacity in addition to the optical density or to derive the optical density of the cleaning agent (20) from the refractive index.

12. Apparatus according to one of the preceding claims, **characterized in that**
an apparatus, preferably an areometer (10), is provided for determining the mass density of the cleaning agent (20), and the control unit (11) is configured to take the mass density determined by this apparatus into account in the determination of the cleaning capacity of the cleaning agent (20).

13. Use of the apparatus (1) according to one of the preceding claims for the post-cleaning of a 3D object (90), which is printed from a light-curing resin formulation, with the aid of a liquid cleaning agent (20) with which the cleaning chamber (2) is filled, in order to remove uncured residues of the resin formulation, which adhere on the surface of the 3D object and have non-light-transmissive and insoluble particles.

14. Use according to Claim 13,
**characterized in that**
isopropanol, ethanol, dimethyl adipate, butyl diglycol, tripropylene glycol monomethyl ether (TPM) or an aqueous mixture thereof, preferably together with at least one surface-active substance, is used as the cleaning agent.

## Revendications

1. Dispositif (1) de post-nettoyage d'objets 3D (90) imprimés à partir d'une formulation de résine photopolymérisable avec des résidus de la formulation de résine, non polymérisés, adhérant à la surface et présentant des particules non transparentes et insolubles, comprenant une chambre de nettoyage (2) pouvant être remplie d'un produit de nettoyage liquide (20) et munie d'un agitateur (5) pour recevoir l'objet 3D (90) à nettoyer, **caractérisé en ce qu'**un détecteur de contamination (8) relié à une unité de commande (11) pour vérifier la capacité de nettoyage résiduelle du produit de nettoyage (20) est prévu qui détermine la densité optique du produit de nettoyage (20) à au moins une longueur d'onde dans la plage de 320 nm à 400 nm, dans lequel le détecteur de contamination (8) est disposé dans une zone maintenue exempte de particules non transparentes et insolubles au-dessus d'une taille prédéfinie dans le produit de nettoyage (20), et l'unité de commande (11) est réalisée pour déterminer à partir de la densité optique déterminée la capacité de nettoyage du produit de nettoyage (20) et pour émettre une indication adéquate en cas de soupassement d'une capacité de nettoyage minimale prédéfinie.

2. Dispositif selon la revendication 1, **caractérisé en ce qu'**un élément filtrant (3) pour maintenir la zone autour du détecteur de contamination (8) exempte de particules non transparentes et insolubles au-dessus d'une taille prédéfinie dans le produit de nettoyage (20) est prévu.

3. Dispositif selon la revendication 2, **caractérisé en ce qu'**un réservoir (6) échangeable pour le produit de nettoyage (20) et une pompe (7) pour refouler le produit de nettoyage (20) du réservoir (6) dans la chambre de nettoyage (2) et de la chambre de nettoyage (2) dans le réservoir (6) sont prévus, dans lequel de préférence le détecteur de contamination (8) est disposé dans le conduit entre le réservoir (6) et la chambre de nettoyage (2), et l'élément filtrant (3) est disposé entre le détecteur de contamination (8) et la chambre de nettoyage (2).

4. Dispositif selon la revendication 3, **caractérisé en ce que** le réservoir (6) présente un élément de mémoire lisible par l'unité de commande (11), de préférence un élément RFID (6'), sur lequel est mémorisée la capacité de nettoyage actuelle du produit de nettoyage (20) chargé dans le réservoir (6).

5. Dispositif selon l'une quelconque des revendications précédentes, **caractérisé en ce que** l'unité de commande (11) est réalisée pour déterminer la densité optique du produit de nettoyage (20) respectivement avant et après un processus de nettoyage.

6. Dispositif selon la revendication 4, **caractérisé en ce que** l'unité de commande (11) est réalisée pour déterminer à partir de la différence de la densité optique du produit de nettoyage (20) avant et après un processus de nettoyage une diminution de la capacité de nettoyage et pour l'adapter à une valeur initiale de la capacité de nettoyage selon la diminution déterminée de la capacité de nettoyage.

7. Dispositif selon l'une quelconque des revendications précédentes, **caractérisé en ce que** pour la détermination de la capacité de nettoyage du produit de nettoyage (20) à partir de la densité optique et/ou pour la détermination de la diminution de la capacité de nettoyage à l'aide de la différence de la densité optique avant et après un processus de nettoyage, l'unité de commande (11) est réalisée pour prendre en compte des courbes caractéristiques prédéterminées pour la combinaison du produit de nettoyage (20) et de la formulation de résine photopolymérisable à partir de laquelle l'objet 3D (90) est fabriqué.

8. Dispositif selon la revendication 7, **caractérisé en ce que** l'unité de commande (11) présente une entrée pour des informations concernant la formulation de résine photopolymérisable à partir de laquelle l'objet 3D (90) est fabriqué.

9. Dispositif selon l'une quelconque des revendications précédentes, **caractérisé en ce que** ladite au moins une longueur d'onde est sélectionnée dans une plage de 350 nm à 400 nm, de préférence de 365 nm à 385 nm.

10. Dispositif selon la revendication 2 et de préférence l'une des revendications 3 à 9, **caractérisé en ce que** l'élément filtrant (3) ne laisse pas passer des particules solides d'une taille supérieure à 1 mm, de préférence supérieure à 0,1 mm, de plus grande préférence supérieure à 0,01 mm ou 0,001 mm.

11. Dispositif selon l'une quelconque des revendications précédentes, **caractérisé en ce que** ledit détecteur de contamination (8) ou un détecteur de contamination supplémentaire est réalisé sous forme de réfractomètre pour déterminer l'indice de réfraction du produit de nettoyage (20), et l'unité de commande est réalisée pour prendre en compte l'indice de réfraction lors de la détermination de la capacité de nettoyage en plus de la densité optique ou pour dériver la densité optique du produit de nettoyage (20) à partir de l'indice de réfraction.

12. Dispositif selon l'une quelconque des revendications précédentes, **caractérisé en ce qu'**un dispositif de détermination de la densité massique du produit de nettoyage (20), de préférence un aréomètre (10), est prévu et l'unité de commande (11) est réalisée pour prendre en compte la densité massique déterminée par ce dispositif lors de la détermination de la capacité de nettoyage du produit de nettoyage (20).

13. Utilisation du dispositif (1) selon l'une quelconque des revendications précédentes pour le post-nettoyage d'un objet 3D (90) imprimé à partir d'une formulation de résine photopolymérisable à l'aide d'un produit de nettoyage (20) liquide versé dans la chambre de nettoyage (2) pour retirer des résidus de la formulation de résine, non polymérisés, adhérant à la surface de l'objet 3D et présentant des particules non transparentes et insolubles.

14. Utilisation selon la revendication 13, **caractérisé en ce que** de l'isopropanol, de l'éthanol, de l'adipate de diméthyle, du butyldiglycol, de l'éther monométhylique de tripropylène glycol (TPM) ou un mélange aqueux de ceuxci, de préférence conjointement avec au moins une substance tensioactive, est utilisé en tant que produit de nettoyage.
